# EUROPEAN PATENT SPECIFICATION

(11) **EP 4 630 778 B1**
(45) Date of publication and mention of the grant of the patent: **22.04.2026**
(21) Application number: 24710804.6
(22) Date of filing: 29.02.2024
(51) Int. Cl.: G01N 1/10, E21B 21/06

(54) **SAMPLE MATERIAL BAG, ARRANGEMENT, AND METHOD OF COLLECTING WET SAMPLE MATERIAL OBTAINED FROM A DRILL HOLE**
PROBENMATERIALBEUTEL, ANORDNUNG UND VERFAHREN ZUM SAMMELN VON NASSEM PROBENMATERIAL AUS EINEM BOHRLOCH
SAC DE MATÉRIAU D'ÉCHANTILLON, AGENCEMENT ET PROCÉDÉ DE COLLECTE DE MATÉRIAU D'ÉCHANTILLON HUMIDE OBTENU À PARTIR D'UN TROU DE FORAGE

(43) Date of publication of application: 15.10.2025
(73) Proprietor: IMA Engineering Ltd Oy, 02630 Espoo (FI)
(72) Inventor: AURANEN, Ilpo, 02630 Espoo (FI); RAATIKAINEN, Jukka, 02630 Espoo (FI)
(74) Representative: Laine IP Oy
(86) International application number: PCT/FI2024/050076
(87) International publication number: WO 2025/181416

(56) References cited:
- CN-U- 212 283 156
- CN-U- 218 853 618
- US-A1- 2019 047 890
- US-A1- 2022 325 516

## Description

### FIELD

The present invention relates to a sample material bag. In particular, the present invention relates to a sample material bag for collecting wet sample material. For example, the wet sample material may be obtained from a drill hole of an underground mine where water flushing of the drill hole is required or from wet sludge obtained from a drill hole of a surface mine.

Further, the present invention relates to an arrangement comprising a sample material bag and a sample material collector.

Furthermore, the present invention relates to a method of collecting wet sample material.

Additionally, the present invention relates to a use of a sample material bag for collecting wet sample material.

### BACKGROUND

Underground mine grade control is typically done using data collected during drill core sampling. Current methods are expensive and time consuming, thus resulting in a very low analysis frequency and sparse spatial location of the ore grade data. Some mines manually collect material samples after the blast from the stope. Other mines use random sample material collection before, during or after the production drilling from wet drill slurry or mud collected in a vessel directly from the drill hole or with a spade from splashed drill cuttings from the tunnel floor. Too sparse drill core analysis information leads to higher waste rock dilution and ore loss resulting in both economical and environmental losses.

In up-hand drilling it is known to collect down flowing drill cuttings from the drill hole in a basin, for example a so-called "sombrero" during drilling. In such a case, the drill cuttings are guided via a pipe or gutter into a vessel. The vessel filled with the drill sludge is left to settle for a short time. The water is then poured out to get rid of the excess water. In this connection, some fine particles are typically lost from the sample. A part of the remaining sample in the vessel is thereafter scooped with a manual spade in a receptacle resulting in a biased sample. The receptacle can then be brought to a mine laboratory for analysis purposes. In the laboratory the sample is dried or de-watered, typically by evaporating the water in an oven. Subsequently, the sample is spit, grinded, split several times and finally the remaining part is pulverized to produce material for the analysis.

Above-described method for collecting sample material is dangerous and in many mines it is forbidden to go near the location where such production drilling is done. Additionally, the collected samples are not representative and it requires a lot of time to get the samples from the underground mine up to the laboratory and analysed.

In surface mining the drill hole is typically not flushed with water except to suppress dust coming out of the drill hole during drilling. However, drill chips may turn to wet mud or sludge when drilling takes place below the water table and water is mixed with drill cuttings. This situation is unfortunate for a mine. The worst situation is that drill sludge is spread around the drill hole on the ground and no samples can be collected for grade analysis and grade control by a laboratory.

The Chinese utility model CN 218853618 U discloses a device for collecting Nelson gravity separation concentrate in the context of mineral processing equipment and mining precious metals.

In view of the foregoing, it would be beneficial to provide at least a method of collecting wet sample material. Preferably, the method should allow collecting representative samples for off-line and/or on-line analysis purposes.

### SUMMARY OF THE INVENTION

The invention is defined by the features of the independent claims. Some specific embodiments are defined in the dependent claims.

According to a first aspect of the present invention, there is provided a sample material bag for receiving wet sample material obtained from a drill hole, the sample material bag comprising an elongated first part having a first open upper portion and a first closed bottom portion, wherein the first open upper portion defines a first periphery, the elongated first part comprising a first filter region made of a first filter material having a first mesh size in a range between 1 to 500 µm, and a coupling region configured to be coupled to a sample material bag coupling section of a sample material collector.

Various embodiments of the first aspect may comprise at least one feature from the following bulleted list:
- a length of the elongated first part is greater than a diameter of the first part
- a length of the elongated first part is in a range between 10 cm and 1 m
- the elongated first part comprises a transparent window portion along at least a part of the first filter region
- the elongated first part comprises a zipper in longitudinal direction of the elongated first part
- the elongated first part comprises at least one RFID tag
- the elongated first part comprises a plurality of indicators in longitudinal direction of the elongated first part
- the first filter region is made of plastic or fabric
- the first filter region is permeable to water
- the sample material bag has printed markings along the first filter region indicating a respective length and/or respective volume
- the sample material bag further comprises a second part having a second open upper portion and a second closed bottom portion, wherein the second open upper portion defines a second periphery, the second part comprising a second filter region made of a second filter material having a second mesh size in a range between 1 mm to 10 mm, wherein the second part is arranged within the elongated first part and the second periphery of the second part is attached to the elongated first part
- wherein the second periphery is attached to a top region of the filter region of the first elongated part, to the coupling region of the elongated first part or to the first periphery
- a length of the second part is less than a length of the filter region of the elongated first part or less than the length of the elongated first part
- the second filter region is made of plastic or fabric
- the second filter region is permeable to water

According to a second aspect of the present invention, there is provided an arrangement comprising at least one sample material bag according to any one of claims 1 - 6, a sample material collector comprising a housing having a sample material inlet for receiving wet sample material obtained from a drill hole, and at least one sample material bag coupling section comprising a sample material outlet for guiding at least a part of the received wet sample material into the at least one sample material bag, wherein the at least one sample material bag is coupled to the at least one sample material bag coupling section.

Various embodiments of the second aspect may comprise at least one feature from the following bulleted list:
- the sample material collector comprises a splitter capable of guiding only a part of the received wet sample material into the at least one sample material bag
- the sample material collector comprises a chute capable of guiding only a part of the received wet sample material into the at least one sample material bag
- the arrangement further comprises a sample material analyser capable of analysing at least partially dried or de-watered sample material present in the at least one sample material bag
- the arrangement further comprises an RFID tag reader for reading at least one RFID tag comprised by the at least one sample material bag
- the arrangement comprises a plurality of sample material bags and the sample material collector comprises a plurality of sample material bag coupling sections, wherein one sample material bag is coupled to each of the plurality of sample bag coupling sections
- the sample material collector is configured to guide the received wet sample material consecutively into each of the plurality of sample material bags
- the sample material collector comprises a heating system
- the at least one sample material bag is arranged within a heated environment, for example within a heated tube

According to a third aspect of the present invention, there is provided a method of collecting wet sample material obtained from a drill hole, the method comprising providing at least one sample material bag according to any one of claims 1 - 6, providing a sample material collector comprising a housing having a sample material inlet for receiving the wet sample material obtained from the drill hole, and at least one sample material bag coupling section comprising a sample material outlet for guiding at least a part of the received wet sample material into the at least one sample material bag, coupling the at least one sample material bag to the at least one sample material bag coupling section, receiving, by the sample material collector, the wet sample material obtained from the drill hole, and guiding, by the sample material collector, at least a part of the received wet sample material into the at least one sample material bag.

Various embodiments of the third aspect may comprise at least one feature from the following bulleted list:
- the method further comprising reading, by an RFID reader, at least one RFID tag comprised by the at least one sample material bag
- the method further comprising analysing, by a sample material analyser, at least partially dried or de-watered sample material present in the at least one sample material bag
- analysing takes place through the sample material bag, subsequent to opening the sample material bag or subsequent to removing dried or de-watered sample material from the sample material bag
- analysing takes place based on a location marked on the sample material bag and then an analysis result is associated with a drill hole depth
- estimating a specific gravity of the sample material present in the sample material bag by measuring a weight of the dried or de-watered sample material bag and to using a volume reading obtained from volume markings on the sample material bag to calculate the estimated specific gravity
- the method comprising using a length reading and/or a volume reading obtained from markings on the sample material bag to estimate a sample recovery rate

According to a fourth aspect of the present invention, there is provided a use of a sample material bag according to any one of claims 1 - 6 for collecting wet sample material obtained from a drill hole.

Considerable advantages are obtained by certain embodiments of the invention. A method of collecting wet sample material such as sample material obtained from a drill hole for analysis purposes is provided. Additionally, a sample material bag utilized in the method and an arrangement comprising a sample material collector and at least one sample material bag are provided. The wet sample material may be obtained from a drill hole of an underground mine. Alternatively, the wet sample material may also be drill sludge or mud obtained from a surface mine.

The at least one sample material bag can be manufactured depending on its purpose depending on ore type and the need to get spatial analysis from the drill hole. Sample material present in the sample material bag is a representative sample for analysis purposes of the material obtained from the drill hole, for example from a drill hole of an underground mine. Wet sample material received at the beginning of the drilling is located at the bottom portion of the first part of the sample material bag. Subsequently received wet sample material is located between the closed bottom portion and the open upper portion of the first part of the sample material bag. Therefore, sample material present in the at least one sample material bag can be associated with a drilling position and drilling depth. The wet sample material within the at least one sample material bag is then dried or de-watered or at least partially dried or de-watered for analysis purposes, while the at least one sample material bag is coupled to the sample material coupling section of the sample material collector. The filter material causes draining and de-watering the sample material by limiting a minimal particle size that is able to pass the filter material. Therefore, a representative sample for analysis purposes can be obtained for multiple analysis of a drill hole during production or exploration drilling. In other words, Measure While Drilling Data (MWD) can be associated with Analyse While Drilling Data (MWD).

In minerals refineries wet processing is typically used. The sample material bag can be used to collect split samples for laboratory analysis. De-watering is beneficial in minimizing the sample handling in the laboratory. Special applications include periodical sample collection into an elongated sample material bag made of filter fabric. Thus, ore grade variation can be verified along the sample material bag length. In this case the length of the sample material bag is proportional to the time of collection, analysis of the sample at different locations of the sample material bag provides an indication of the grade variation during the collection period.

In surface drilling blast holes are typically quite long, for example 15m to 25m. In case that ore is in veins, it is important to be able to locate a position of the vein in the ore bench. In case that the sample is collected into a sample material bag, the vein location can be detected when analysing the sample material present in the sample material bag along its length. In order to get a more precise location in a sample material bag sample in a drilling application or to get a correct time in concentrator shift sampling, RFID tags may be dropped into the sample material bag during sample collection. Dropping the RFID tag with known ID code at known time or at known drill penetration depth, it is possible to locate the position or the time with the grade or composition of the sample in the sample material bag with the drill hole depth or process time. Dropping of the RFID tags can be pre-defined and automatic or manually controlled by a user.

### BRIEF DESCRIPTION OF THE DRAWINGS

FIGURE 1 illustrates a schematic view of a sample material bag in accordance with at least some embodiments of the present invention,
FIGURE 2 illustrates a schematic view of another sample material bag in accordance with at least some embodiments of the present invention,
FIGURE 3 illustrates a schematic view of a further sample material bag in accordance with at least some embodiments of the present invention,
FIGURE 4 illustrates a schematic view of an even further sample material bag in accordance with at least some embodiments of the present invention,
FIGURE 5 illustrates a schematic view of an arrangement in accordance with at least some embodiments of the present invention, and
FIGURE 6 illustrates a schematic view of a sample material analyser of an arrangement in accordance with at least some embodiments of the present invention.

### EMBODIMENTS

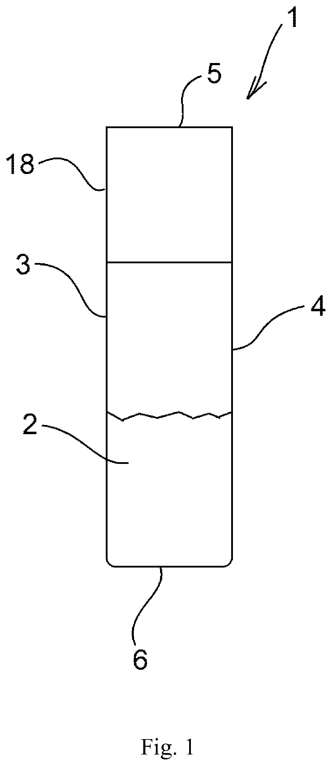

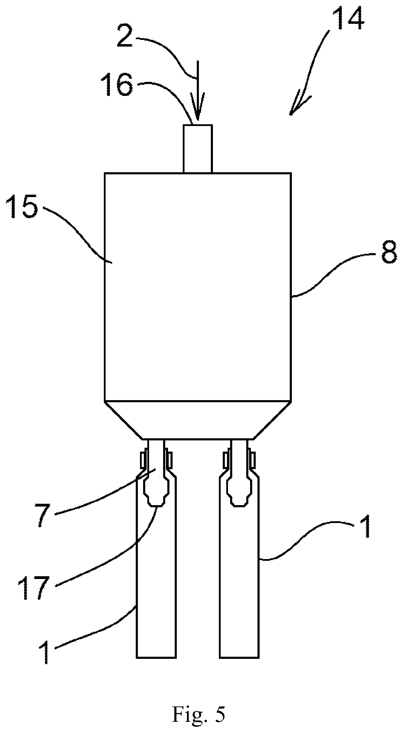

In FIGURE 1 a schematic view of a sample material bag 1 in accordance with at least some embodiments of the present invention is illustrated. A sample material bag 1 for receiving wet sample material 2 obtained from a drill hole is provided. The wet sample material may be directly obtained from a drill hole of an underground mine where water flushing of the drill hole is required in order to avoid or at least reduce distribution of drill dust. Alternatively, wet sample material in the form of drill sludge or mud may be obtained from a surface mine. The sample material bag 1 comprises an elongated first part 3 having a first open upper portion 5 and a first closed bottom portion 6. The first open upper portion 5 defines a first periphery. The elongated first part 3 may be, for example, in the form of a hollow cylinder or substantially cylindrical, wherein one end of the hollow cylinder is open and the opposite end is closed. The elongated first part 3 may also have other shapes, for example two layers of sheet material may be connected to each other to form a bag-like structure having a first open upper portion 5 and a first closed bottom portion 6. The elongated first part 3 comprises a first filter region 4 made of a first filter material having a first mesh size in a range between 1 µm to 500 µm, between 1 µm to 250 µm or between 1 µm to 100 µm. The first filter region 4 is typically made of plastic or fabric. The first filter region may be permeable to water. Additionally, the elongated first part 3 comprises a coupling region 18 configured to be coupled to a sample material bag coupling section 7 of a sample material collector 8. The shape and size of the coupling region 18 is designed to engage with a sample material coupling section 7 of a sample material collector 8 as described in connection with FIGURE 5. The material of the first filter region 4 and the material of the coupling region 18 may be different or identical. Typically, a length of the elongated first part 3 is greater or substantially greater than a diameter or a width of the first part 3. A length of the elongated first part 3 may be in a range between 10 cm and 1 m, for instance.

Wet sample material 2, i.e. wet drill sludge, mud, wet drill cuttings or wet drill chips, obtained from a drill hole of an underground mine or a surface mine can be guided into the sample material bag 1 via a sample material collector 8 as described below in connection with FIGURE 5. Subsequently, the sample material present in the sample material bag 1 can be dried or de-watered due to the first filter region 4 and subsequently analysed. The at least one sample material bag 1 is manufactured depending on its purpose based on ore type and the need to get spatial analysis from the drill hole. For example, the mesh size for analysis of gold may be different than for analysis of other materials in order to avoid loss of gold during drying or de-watering.

According to certain embodiments, the elongated first part 3 further comprises a zipper (not shown) in longitudinal direction of the elongated first part 3. As a consequence, the sample material bag 1 can be opened for analysis of the sample material present in the sample material bag 1 by certain analytical methods. Some other analytical methods however allow analysis through the sample material bag 1.

Instead or in addition, the elongated first part 3 may further comprise at least one RFID tag according to certain embodiments. For example, an RFID tag may be provided at or near the closed bottom portion 6 and provide information about at least one of an identification number, a filter material of the sample material bag 1 and an attachment position of the RFID tag. Further RFID tags may be provided along the first filter region 4 indicating a respective attachment position. The attachment position of such RFID tags may be useful for analysis at a later stage. RFID tags may also be provided on a substrate and inserted into the sample material bag 1 either manually or automatically by the sample material collector 8 described in connection with FIGURE 5.

The sample material bag 1 may, for example, further comprise a band integrated into the open end of the first filter region 4, integrated into the coupling region 18 or integrated into the first periphery so that a user is able to close the sample material bag 1 after filling it with sample material 2.

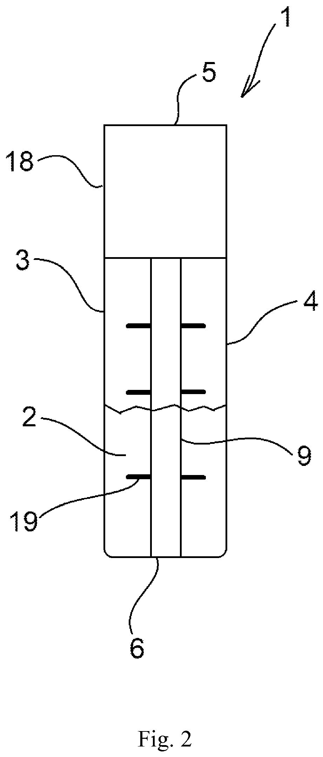

In FIGURE 2 a schematic view of another sample material bag 1 in accordance with at least some embodiments of the present invention is illustrated. The sample material bag 1 comprises the features described above in connection with FIGURE 1. Additionally, the elongated first part 3 comprises a transparent window portion 9 along at least a part of the first part 3, for example along the first filter region 4. Consequently, the colour of the sample material 2 and/or the level of sample material 2 present at given time can be monitored through the transparent window portion 9. Monitoring may, for example, take place by utilizing an image capturing device providing images or video data so that the sample material 2 can be inspected remotely and/or at a later stage. According to certain embodiments, a plurality of indicators 19 may be additionally provided for indicating the level of sample material 2 present in the sample material bag 1 at given time.

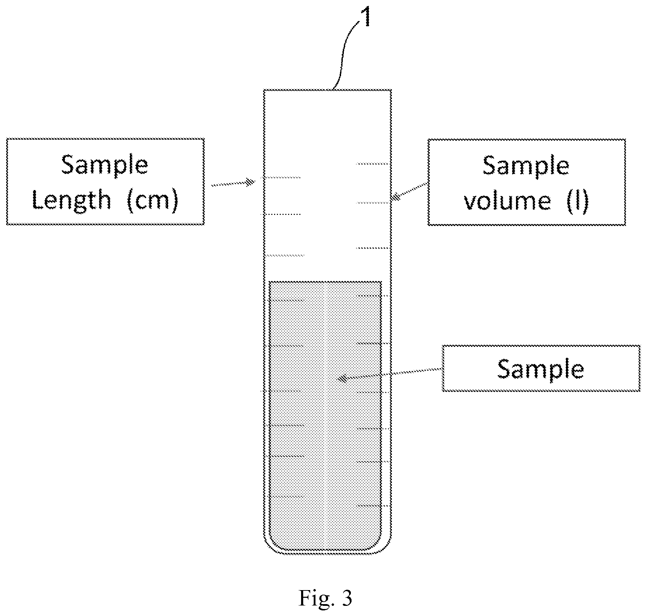

In FIGURE 3 a schematic view of a further sample material bag in accordance with at least some embodiments of the present invention is illustrated. The sample material bag 1 comprises the features described above in connection with FIGURE 1 or FIGURE 2. As can be seen, different indicators for length and volume are provided on the sample material bag 1. The indicators may be, for example, printed on the sample material bag 1. Thus, a user can obtain information about the filling status of the sample material bag 1.

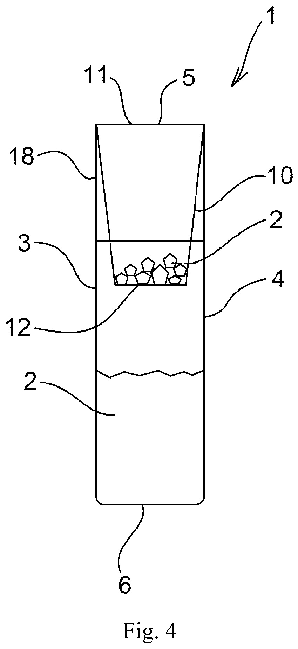

In FIGURE 4 a schematic view of an even further sample material bag 1 in accordance with at least some embodiments of the present invention is illustrated. The sample material bag 1 comprises the features described above in connection with FIGURE 1, FIGURE 2 or FIGURE 3. Additionally, the sample material bag 1 further comprises a second part 10 having a second open upper portion 11 and a second closed bottom portion 12. The second open upper portion 11 defines a second periphery. The second part 10 comprises a second filter region 13 made of a second filter material having a second mesh size in a range between 1 mm to 10 mm. The second filter region 13 is typically made of plastic or fabric. The second filter region is permeable to water and small particles. The second part 10 is arranged within the elongated first part 3 and the second periphery of the second part 10 is attached to the elongated first part 4. Typically, the second periphery of the second part 10 is attached to a top region of the first filter region 4 of the elongated first part 3, to the coupling region 18 of the elongated first part 4 or to the first periphery. A length of the second part 10 is less than a length of the filter region 4 of the elongated first part 3 or less than the length of the first part 3.

Coarse sample material 2 or sample material lumps obtained from the drill hole can therefore be received in the second part 10 of the sample material bag 1, while fine sample material 2 can pass the second filter region 13 and accumulates within the first filter region 4 of the first part 3 of the sample material bag 1. Separated coarse sample material or sample material lumps are particularly interesting for geological mineralogy analysis.

In FIGURE 5 a schematic view of an arrangement 14 in accordance with at least some embodiments of the present invention is illustrated. The arrangement 14 comprises at least one sample material bag 1 as described above in connection with FIGURE 1, FIGURE 2, FIGURE 3 or FIGURE 4. Additionally, the arrangement 14 comprises a sample material collector 8. The sample material collector 8 comprises a housing 15 having a sample material inlet 16 for receiving wet sample material 2, i.e. wet drill sludge, mud, wet drill cuttings or wet drill chips, obtained from a drill hole. The wet sample material 2 may be obtained from a drill hole of an underground mine or a surface mine. The housing 15 is typically made of metal, plastic material or a composite material. The wet sample material 2 may be automatically provided directly from the drill hole via a piping system, a hose or a conveyor, for instance. The sample material collector 8 further comprises at least one sample material bag coupling section 7. The sample material coupling section 7 is typically provided at a lower end of the housing 15. The sample material coupling section 7 comprises a sample material outlet 17. The at least one sample material bag 1 can be coupled to the at least one sample material bag coupling section 7 and at least at least a part of the received wet sample material can be guided from the sample material collector 8 into the at least one sample material bag 1 via the at least one sample material outlet 17. For example, the sample material coupling section 7 may comprise a pipe, an object arranged outside of the pipe and having a greater diameter or greater dimensions than the diameter of the pipe and a movable ring above the object. When the coupling region 18 of the at least one sample material bag 1 is pulled over the object, the sample material bag 1 can be temporarily coupled to the sample material coupling section 7 by sliding the ring over the coupling region 18 towards the object in order to press the material of the coupling region 18 against the pipe and to hold the sample material bag 1 in position. Subsequently, sample material 2 can be guided into the sample material bag 1. According to certain embodiments, the sample material collector 8 comprises a plurality of sample material bag coupling sections 7 and one sample material bag 1 can be coupled to each of the plurality of sample bag coupling sections 7. In such a case, the sample material collector 8 is configured to guide the received wet sample material 2 consecutively into each of the plurality of sample material bags 1.

As a consequence, wet sample material 2 received at the beginning of the drilling is located at the bottom portion 6 of the first part 3 of the sample material bag 1. Subsequently received wet sample material 2 is located between the closed bottom portion 6 and the open upper portion 6 of the first part 3 of the sample material bag 1. Therefore, sample material 2 present in the at least one sample material bag 1 can be associated with a drilling position and drilling depth. The wet sample material 2 within the at least one sample material bag 1 is then dried or de-watered or at least partially dried or de-watered for analysis purposes, while the at least one sample material bag 1 is coupled to the sample material coupling section 7. The filter material causes draining and de-watering the sample material by limiting a minimal particle size that is able to pass the filter material. Therefore, a representative sample for analysis purposes can be obtained for multiple analysis of a drilled hole during production or exploration drilling.

The sample material collector 8 may optionally comprise a splitter capable of guiding only a part of the received wet sample material 2 into the at least one sample material bag 1. Wet sample material may be transported to the splitter via a chute, for instance. The splitter may be configured to guide, for example, only 10% to 30% of the wet sample material 2 received from the drill hole into the at least one sample material bag 1. In such a case, the remaining part of the wet sample material 2 received by the sample material collector 8 is guided out of the sample material collector 8.

Dimensioning of the sample material bag 1 typically includes estimating a split ratio and planning analytical requirements. The filter material of the first and/or second filter regions 4, 13 is a compromise based on an average speed of drying or de-watering of the sample material and obtaining optimum particle size fractions to be collected without losing analytical performance in case that the smallest fractions are lost during drying or de-watering. As a consequence, a tailor-made sample material bag 1 can be manufactured for each application taking into account dimensions such as length and diameter and filtering capability caused by filter media selection. Filtering results can be tested in each case to study the error in sample representativeness, if the smallest fraction is lost in the filtrate.

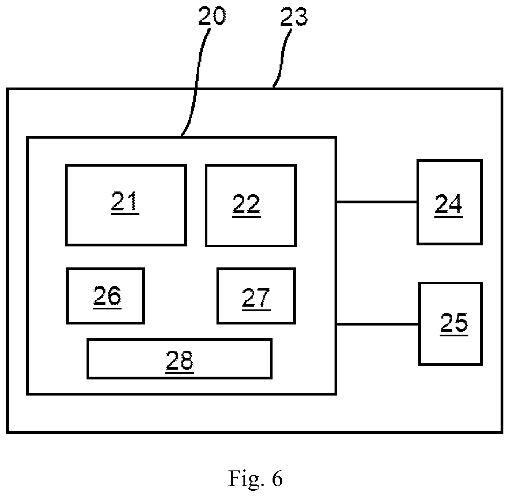

In FIGURE 6 a schematic view of a sample material analyser 23 of an arrangement 14 in accordance with at least some embodiments of the present invention is illustrated. According to certain embodiments, the arrangement 14 may further comprise a sample material analyser 23 capable of analysing at least partially dried or de-watered sample material 2 present in the at least one sample material bag 1. De-watered sample material may be analysed off-line or online with selected analytical methods. The de-watered sample material may be, for example, analysed directly in an underground mine without the need of transporting it up to a laboratory. Spatial analytical information can be obtained to provide an accurate 3D model of the ore grade in the stope, for instance. For example, recorded drilling parameters may be associated with the spatial location of sample material in the sample material bag 1 in order to obtain analytical grade location of the sample material in the drill hole. When the drill bit penetrates into the rock to make the drill hole, drilling parameters are recorded. This data known as Measure While Drilling Data (MWD) is used and integrated with the Analyse While Drilling Data (AWD) obtained from the sample material analyser 23. For example, the MWD data typically includes a drill hole position and a drill hole depth, while the AWD data includes chemical elemental, oxides and/or mineralogical data. As a consequence, AWD data can be associated with a drill hole position and drill hole depth data to obtain a 3D map of materials present in the rock. For example, analysing may take place based on a location marked on the sample material bag 1 and then the analysis result is associated with a drill hole depth. For example, when the first filter region 4 of the sample material bag 1 is 40 cm long and analysis is made at 20 cm length of the first filter region 4, then the analysis result corresponds to a 10 m drill hole length of a 20 m long drill hole. A quick way to estimate a specific gravity of the sample material 2 present in the sample material bag 1 is to measure a weight of the dried or de-watered sample material bag 1 and to use a volume reading obtained from volume markings on the sample material bag 1 to calculate an estimated specific gravity. Further, an ore sample recovery can be registered in sampling. In case a sample is lost in the drill hole during sampling, the sample length is shorter in the sample material bag 1 and of lower volume. This sample recovery can be used as a sample quality indicator, i.e. the lower the recovery rate the more cracks and crevices are in the rock and/or the weaker the rock. In other words, the fill ratio of the sample material bag 1 indicates sample recovery from the drill hole and is an indicator for rock strength.

The sample analyser 23 may comprise at least one sensor 24 capable of detecting signals or obtaining information from a sample material bag 1 or the sample material present in the sample material bag 1. Based on the received signals or obtained information, the sample material analyser 23 may be utilized for analysis of the sample material. An analytical method is selected for each application and may include one or more analytical methods. Examples of analytical methods are XRF, PGNAA (Prompt Gamma Neutron Activation Analysis), IR (infra-red), Raman spectroscopy, Libs (Laser induced breakdown spectroscopy), LIF (Laser Induced Fluorescence spectroscopy)) and similar methods used in analysis of physical samples common in the mining industry. Analysis may take place on-line or off-line. Analysis may take place, for example, directly in an underground mine. The analysis may take place through the sample material bag 1. Alternatively, the sample material bag 1 may be opened or the dried or de-watered sample material present in the sample material bag 1 may be removed prior to the analysis.

Additionally, the arrangement 14 may further comprise an RFID tag reader for reading at least one RFID tag comprised by the at least one sample material bag 1. For example, an identification number of the sample material bag 1 may be read out prior to performing an analysis in order to associate the respective sample material bag 1 with a respective drill hole. Several RFID tags may be further provided along the first filter region 4 of the sample material bag 1, for example at 0%, 25%, 50%, 75% and 100% of the length of the filter region. When sample material 2 present in the sample material bag 1 is analysed at the different positions, a user can obtain information about the sample material at different drilling depths. Information obtained at 0% of the length of the first filter region 4 may, for example, represent sample material from the beginning of drilling and information obtained at 100% of the length of the first filter region 4 may, for example, represent sample material from the end of drilling. In case that drilling takes place in a continuous way, markings on the sample material bag 1 can be associated with a drill bit location in the drill hole. When the length of the first filter region 4 is known and the drill hole length is also known, an analysis may take place along the sample material bag length to obtain information about the drill hole.

According to certain embodiments, the sample material collector 8 comprises a heating system. This is particularly beneficial when obtaining the wet sample material 2 takes place in arctic conditions during surface mining to avoid freezing of the wet sample material 2. A heated conveyor may convey the wet sample material from the drill hole collar to the sample material collector 8. The wet sample material 2 from the drill hole may then be transported to the splitter via a chute, for instance. Also the splitter and the chute may be heated. The splitter and the chute may be periodically washed with hot water. Subsequently, the sample material bag 1 is filled with the wet sample material. The sample material bag 1 may be arranged within a heated environment, for example within a heated tube, to keep the wet sludge warm to avoid freezing of the sample material bag surface and/or sample material and to allow drying or de-watering of the sample material present in the sample material bag 1.

Additionally, the sample material analyser 23 may comprise a processing unit 20 comprising a processor 21 as shown in FIGURE 5. The processor 21 may comprise, for example, a single- or multi-core processor. A single-core processor comprises one processing core and a multi-core processor comprises more than one processing core. The processor 21 may further comprise more than one processor. A processing core may comprise, for example, a Cortex-A8 processing core manufactured by ARM Holdings or a Steamroller processing core produced by Advanced Micro Devices Corporation. Processor 21 may comprise at least one Qualcomm Snapdragon and/or Intel Atom processor. Processor 21 may be means for performing method steps in sample material analyser 23. Processor 21 may be configured, at least in part by computer instructions, to perform actions.

Further, the processing unit 20 may comprise at least one memory 22 as shown in FIGURE 5. Memory 22 may comprise random-access memory and/or permanent memory. Memory 22 may comprise at least one RAM chip. Memory 22 may be at least in part accessible to processor 21. Memory 22 may be at least in part comprised in processor 21. Memory 22 may be means for storing information. Memory 22 may comprise computer instructions that processor 21 is configured to execute. When computer instructions configured to cause processor 21 to perform certain actions stored in memory 21, and sample material analyser 23 overall is configured to run under the direction of processor 21 using computer instructions from memory 22, processor 21 and/or its at least one processing core may be considered to be configured to perform said certain actions. Memory 22 may be at least in part external to sample material analyser 23 but accessible to sample material analyser 23. Data received from the at least one sensor 24 of the sample material analyser 23, data received from the RFID tag reader 25 and/or MWD data may be, for example, stored in the memory 22. AWD data may be associated with MWD data by the processor 21 and stored in memory 22.

Furthermore, the processing unit 20 may comprise a transmitter 26 for transmitting data as shown in FIGURE 5. The transmitter 26 may be configured to transmit information in accordance with at least one communication standard. The transmitter 26 may comprise more than one transmitter. The transmitter 26 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example. Data obtained from the at least one sensor 24, obtained from the sample analyser 23, analysis results, AWD data, MWD data and/or AWD data associated with MWD data may be, for example, transmitted to a node such as a server, a cloud-based server, a tablet computer or a smartphone by means of the transmitter 26. The node may be located in the underground mine, in the surface mine or external to the mine.

Additionally, the processing unit 20 may furthermore comprise a receiver 27 for receiving data as shown in FIGURE 5. The receiver 27 may be configured to receive information in accordance with at least one communication standard. The receiver 27 may comprise more than one receiver. The receiver 27 may be configured to operate in accordance with global system for mobile communication, GSM, wideband code division multiple access, WCDMA, 5G, long term evolution, LTE, IS-95, wireless local area network, WLAN, Ethernet and/or worldwide interoperability for microwave access, WiMAX, standards, for example. Data received by the receiver 27, for example computer program code, may be stored in the memory 22. The receiver 27 may be configured to receive signals from the at least one sensor 24, the RFID tag reader 25, MWD data, and/or other data. Data obtained from the at least one sensor 24, obtained from the sample material analyser 23 and/or analysis results may be associated with the MWD data.

Even further, the processing unit 20 may comprise a user interface 28. The user interface 28 may be a touchscreen, a keyboard or a plurality of buttons, for instance. Functionalities of the sample material analyser 23 may be controlled by a user utilizing the user interface 28, for instance.

Additionally, the sample material analyser 23 may optionally comprise a display for displaying of information.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in collecting wet sample material obtained from a drill hole of an underground mine or a surface mine for further analysis purposes.

### REFERENCE SIGNS LIST

- 1: sample material bag
- 2: sample material
- 3: first part
- 4: first filter region
- 5: first open upper portion
- 6: first closed bottom portion
- 7: sample material bag coupling section
- 8: sample material collector
- 9: transparent window portion
- 10: second part
- 11: second open upper portion
- 12: second closed bottom portion
- 13: second filter region
- 14: arrangement
- 15: housing
- 16: sample material inlet
- 17: sample material outlet
- 18: coupling region
- 19: indicator
- 20: processing unit
- 21: processor
- 22: memory
- 23: sample material analyser
- 24: sensor
- 25: RFID tag reader
- 26: transmitter
- 27: receiver
- 28: user interface

## Claims

1. A sample material bag (1) for receiving wet sample material (2) obtained from a drill hole, the sample material bag (1) comprising:
- an elongated first part (3) having a first open upper portion (5) and a first closed bottom portion (6), wherein the first open upper portion (5) defines a first periphery, the elongated first part (3) comprising:
∘ a first filter region (4) made of a first filter material having a first mesh size in a range between 1 to 500 µm, and
∘ a coupling region (18) configured to be coupled to a sample material bag coupling section (7) of a sample material collector (8).

2. The sample material bag (1) according to claim 1, wherein the elongated first part (3) comprises a transparent window portion (9) along at least a part of the first filter region (4).

3. The sample material bag (1) according to claim 1 or 2, wherein the elongated first part (3) comprises a zipper in longitudinal direction of the elongated first part (3).

4. The sample material bag (1) according to any one of claims 1 - 3, wherein the elongated first part (3) comprises at least one **RFID** tag.

5. The sample material bag (1) according to any one of claims 1 - 4, wherein the elongated first part (3) comprises a plurality of indicators in longitudinal direction of the elongated first part (3).

6. The sample material bag (1) according to any one of claims 1 - 5, wherein the sample material bag (1) further comprises:
- a second part (10) having a second open upper portion (11) and a second closed bottom portion (12), wherein the second open upper portion (11) defines a second periphery, the second part (10) comprising a second filter region (13) made of a second filter material having a second mesh size in a range between 1 mm to 10 mm, wherein the second part (10) is arranged within the elongated first part (3) and the second periphery of the second part (10) is attached to the elongated first part (4).

7. An arrangement (14) comprising:
- at least one sample material bag (1) according to any one of claims 1 - 6,
- a sample material collector (8) comprising:
∘ a housing (15) having a sample material inlet (16) for receiving wet sample material (2) obtained from a drill hole, and
∘ at least one sample material bag coupling section (7) comprising a sample material outlet (17) for guiding at least a part of the received wet sample material into the at least one sample material bag (1),
- wherein the at least one sample material bag (1) is coupled to the at least one sample material bag coupling section (7).

8. The arrangement (14) according to claim 7, wherein the sample material collector (8) comprises a splitter capable of guiding only a part of the received wet sample material (2) into the at least one sample material bag (1).

9. The arrangement (14) according to claim 7 or 8, wherein the arrangement (14) further comprises a sample material analyser (23) capable of analysing at least partially dried or de-watered sample material (2) present in the at least one sample material bag (1).

10. The arrangement (14) according to any one of claims 7 - 9, wherein the arrangement (14) further comprises an RFID tag reader for reading at least one RFID tag comprised by the at least one sample material bag (1).

11. A method of collecting wet sample material (2) obtained from a drill hole, the method comprising:
- providing at least one sample material bag (1) according to any one of claims 1 - 6,
- providing a sample material collector (8) comprising:
∘ a housing (15) having a sample material inlet (16) for receiving the wet sample material (2) obtained from the drill hole, and
∘ at least one sample material bag coupling section (7) comprising a sample material outlet (17) for guiding at least a part of the received wet sample material (2) into the at least one sample material bag (1),
- coupling the at least one sample material bag (1) to the at least one sample material bag coupling section (7),
- receiving, by the sample material collector (8), the wet sample material (2) obtained from the drill hole, and
- guiding, by the sample material collector (8), at least a part of the received wet sample material (2) into the at least one sample material bag (1).

12. The method according to claim 11, the method further comprising:
- reading, by an RFID reader, at least one RFID tag comprised by the at least one sample material bag (1).

13. The method according to claim 11 or 12, the method further comprising:
- analysing, by a sample material analyser (23), at least partially dried or de-watered sample material present in the at least one sample material bag (1).

14. The method according to claim 13, wherein analysing takes place through the sample material bag (1), subsequent to opening the sample material bag (1) or subsequent to removing dried or de-watered sample material from the sample material bag (1).

15. Use of a sample material bag (1) according to any one of claims 1 - 6 for collecting wet sample material (2) obtained from a drill hole.

## Patentansprüche

1. Probenmaterialbeutel (1) zum Aufnehmen von nassem Probenmaterial (2), das aus einem Bohrloch erhalten wird, wobei der Probenmaterialbeutel (1) umfasst:
- einen länglichen ersten Teil (3), der einen ersten offenen oberen Abschnitt (5) und einen ersten geschlossenen unteren Abschnitt (6) aufweist, wobei der erste offene obere Abschnitt (5) eine erste Peripherie definiert, wobei der längliche erste Teil (3) umfasst:
- einen ersten Filterbereich (4), der aus einem ersten Filtermaterial gefertigt ist, das eine erste Maschenweite in einem Bereich zwischen 1 und 500 µm aufweist, und
- einen Kopplungsbereich (18), der konfiguriert ist, um mit einem Probenmaterialbeutel-Kopplungsabschnitt (7) eines Probenmaterialsammlers (8) gekoppelt zu werden.

2. Probenmaterialbeutel (1) nach Anspruch 1, wobei der längliche erste Teil (3) einen transparenten Fensterabschnitt (9) entlang mindestens eines Teils des ersten Filterbereichs (4) umfasst.

3. Probenmaterialbeutel (1) nach Anspruch 1 oder 2, wobei der längliche erste Teil (3) einen Reißverschluss in Längsrichtung des länglichen ersten Teils (3) umfasst.

4. Probenmaterialbeutel (1) nach einem der Ansprüche 1-3, wobei der längliche erste Teil (3) mindestens ein RFID-Etikett umfasst.

5. Probenmaterialbeutel (1) nach einem der Ansprüche 1-4, wobei der längliche erste Teil (3) eine Vielzahl von Indikatoren in Längsrichtung des länglichen ersten Teils (3) umfasst.

6. Probenmaterialbeutel (1) nach einem der Ansprüche 1-5, wobei der Probenmaterialbeutel (1) weiter umfasst:
- einen zweiten Teil (10), der einen zweiten offenen oberen Abschnitt (11) und einen zweiten geschlossenen unteren Abschnitt (12) aufweist, wobei der zweite offene obere Abschnitt (11) eine zweite Peripherie definiert, wobei der zweite Teil (10) einen zweiten Filterbereich (13) umfasst, der aus einem zweiten Filtermaterial gefertigt ist, das eine zweite Maschenweite in einem Bereich zwischen 1 mm und 10 mm aufweist, wobei der zweite Teil (10) innerhalb des länglichen ersten Teils (3) angeordnet ist und die zweite Peripherie des zweiten Teils (10) am länglichen ersten Teil (4) befestigt ist.

7. Anordnung (14), umfassend:
- mindestens einen Probenmaterialbeutel (1) nach einem der Ansprüche 1-6,
- einen Probenmaterialsammler (8), umfassend:
- ein Gehäuse (15), das einen Probenmaterialeinlass (16) zum Aufnehmen von nassem Probenmaterial (2) aufweist, das aus einem Bohrloch erhalten wird, und
- mindestens einen Probenmaterialbeutel-Kopplungsabschnitt (7), der einen Probenmaterialauslass (17) zum Leiten mindestens eines Teils des empfangenen nassen Probenmaterials in den mindestens einen Probenmaterialbeutel (1) umfasst,
- wobei der mindestens eine Probenmaterialbeutel (1) mit dem mindestens einen Probenmaterialbeutel-Kopplungsabschnitt (7) gekoppelt ist.

8. Anordnung (14) nach Anspruch 7, wobei der Probenmaterialsammler (8) einen Teiler umfasst, der zum Leiten nur eines Teils des aufgenommenen nassen Probenmaterials (2) in den mindestens einen Probenmaterialbeutel (1) imstande ist.

9. Anordnung (14) nach Anspruch 7 oder 8, wobei die Anordnung (14) weiter einen Probenmaterialanalysator (23) umfasst, der zum Analysieren von mindestens teilweise getrocknetem oder entwässertem Probenmaterial (2) imstande ist, das in dem mindestens einen Probenmaterialbeutel (1) vorhanden ist.

10. Anordnung (14) nach einem der Ansprüche 7-9, wobei die Anordnung (14) weiter ein RFID-Etikett-Lesegerät zum Auslesen mindestens eines RFID-Etiketts umfasst, das in dem mindestens einen Probenmaterialbeutel (1) umfasst ist.

11. Verfahren zum Sammeln von nassem Probenmaterial (2), das aus einem Bohrloch erhalten wird, wobei das Verfahren umfasst:
- Bereitstellen mindestens eines Probenmaterialbeutels (1) nach einem der Ansprüche 1-6,
- Bereitstellen eines Probenmaterialsammlers (8), umfassend:
- ein Gehäuse (15), das einen Probenmaterialeinlass (16) zum Aufnehmen des nassen Probenmaterials (2) aufweist, das aus dem Bohrloch erhalten wird, und
- mindestens einen Probenmaterialbeutel-Kopplungsabschnitt (7), der einen Probenmaterialauslass (17) zum Leiten mindestens eines Teils des empfangenen nassen Probenmaterials (2) in den mindestens einen Probenmaterialbeutel (1) umfasst,
- Koppeln des mindestens einen Probenmaterialbeutels (1) mit dem mindestens einen Probenmaterialbeutel-Kopplungsabschnitt (7),
- Empfangen des aus dem Bohrloch erhaltenen nassen Probenmaterials (2) durch den Probenmaterialsammler (8), und
- Leiten mindestens eines Teils des aufgenommenen nassen Probenmaterials (2) durch den Probenmaterialsammler (8) in den mindestens einen Probenmaterialbeutel (1).

12. Verfahren nach Anspruch 11, wobei das Verfahren weiter umfasst:
- Auslesen mindestens eines RFID-Etiketts, das in dem mindestens einen Probenmaterialbeutel (1) umfasst ist, durch ein RFID-Lesegerät.

13. Verfahren nach Anspruch 11 oder 12, wobei das Verfahren weiter umfasst:
- Analysieren des in dem mindestens einen Probenmaterialbeutel (1) vorhandenen, mindestens teilweise getrockneten oder entwässerten Probenmaterials durch einen Probenmaterialanalysator (23).

14. Verfahren nach Anspruch 13, wobei Analysieren durch den Probenmaterialbeutel (1) hindurch erfolgt, nachdem der Probenmaterialbeutel (1) geöffnet worden ist, oder nachdem getrocknetes oder entwässertes Probenmaterial aus dem Probenmaterialbeutel (1) entnommen worden ist.

15. Verwenden eines Probenmaterialbeutels (1) nach einem der Ansprüche 1-6 zum Sammeln von nassem Probenmaterial (2), das aus einem Bohrloch erhalten wird.

## Revendications

1. Sac de matériau d'échantillon (1) destiné à recevoir un échantillon humide (2) obtenu à partir d'un trou de forage, le sac à échantillon (1) comprenant :
- une première partie allongée (3) présentant une première portion supérieure ouverte (5) et une première portion inférieure fermée (6), dans lequel la première portion supérieure ouverte (5) définit une première périphérie, la première partie allongée (3) comprenant :
- une première région de filtre (4) constituée d'un premier matériau filtrant présentant une première taille de maille dans une plage entre 1 et 500 µm, et
- une région de couplage (18) configurée pour être couplée à une section de couplage de sac d'échantillon (7) d'un collecteur de matériau d'échantillon (8).

2. Sac de matériau d'échantillon (1) selon la revendication 1, dans lequel la première partie allongée (3) comprend une portion de fenêtre transparente (9) le long d'au moins une partie de la première région de filtre (4).

3. Sac de matériau d'échantillon (1) selon la revendication 1 ou 2, dans lequel la première partie allongée (3) comprend une fermeture à glissière dans une direction longitudinale de la première partie allongée (3).

4. Sac de matériau d'échantillon (1) selon l'une quelconque des revendications 1-3, dans lequel la première partie allongée (3) comprend au moins une étiquette RFID.

5. Sac de matériau d'échantillon (1) selon l'une quelconque des revendications 1-4, dans lequel la première partie allongée (3) comprend une pluralité d'indicateurs dans une direction longitudinale de la première partie allongée (3).

6. Sac de matériau d'échantillon (1) selon l'une quelconque des revendications 1-5, dans lequel le sac de matériau d'échantillon (1) comprend en outre :
- une seconde partie (10) présentant une seconde portion supérieure ouverte (11) et une seconde portion inférieure fermée (12), dans lequel la seconde portion supérieure ouverte (11) définit une seconde périphérie, la seconde partie (10) comprenant une seconde région de filtre (13) constituée d'un second matériau de filtre présentant une seconde taille de maille dans une plage entre 1 mm et 10 mm, dans lequel la seconde partie (10) est agencée à l'intérieur de la première partie allongée (3) et la seconde périphérie de la seconde partie (10) est fixée à la première partie allongée (4).

7. Agencement (14) comprenant :
- au moins un sac de matériau d'échantillon (1) selon l'une quelconque des revendications 1-6,
- un collecteur de matériau d'échantillon (8) comprenant :
- un boîtier (15) présentant une entrée de matériau d'échantillon (16) pour recevoir un matériau d'échantillon humide (2) obtenu à partir d'un trou de forage, et
- au moins une section de couplage de sac de matériau d'échantillon (7) comprenant une sortie de matériau d'échantillon (17) pour guider au moins une partie du matériau d'échantillon humide reçu dans l'au moins un sac de matériau d'échantillon (1),
- dans lequel l'au moins un sac de matériau d'échantillon (1) est couplé à l'au moins une section de couplage de sac de matériau d'échantillon (7).

8. Agencement (14) selon la revendication 7, dans lequel le collecteur de matériau d'échantillon (8) comprend un séparateur capable de guider seulement une partie du matériau d'échantillon humide reçu (2) dans l'au moins un sac de matériau d'échantillon (1).

9. Agencement (14) selon la revendication 7 ou 8, dans lequel l'agencement (14) comprend en outre un analyseur de matériau d'échantillon (23) capable d'analyser un matériau d'échantillon (2) au moins partiellement séché ou déshydraté présent dans l'au moins un sac de matériau d'échantillon (1).

10. Agencement (14) selon l'une quelconque des revendications 7-9, dans lequel l'agencement (14) comprend en outre un lecteur d'étiquettes RFID pour lire au moins une étiquette RFID composée de l'au moins un sac de matériau d'échantillon (1).

11. Procédé de collecte de matériau d'échantillon humide (2) obtenu à partir d'un trou de forage, le procédé comprenant :
- la fourniture d'au moins un échantillon de sac de matériau d'échantillon (1) selon l'une quelconque des revendications 1- 6,
- la fourniture d'un collecteur de matériau d'échantillon (8) comprenant :
- un boîtier (15) présentant une entrée de matériau d'échantillon (16) pour recevoir le matériau d'échantillon humide (2) obtenu à partir du trou de forage, et
- au moins une section de couplage de sac de matériau d'échantillon (7) comprenant une sortie de matériau d'échantillon (17) pour guider au moins une partie du matériau d'échantillon humide reçu (2) dans l'au moins un sac de matériau d'échantillon (1),
- le couplage d'au moins un sac de matériau d'échantillon (1) à la section de couplage de sac de matériau d'échantillon (7),
- la réception, par le collecteur de matériau d'échantillon (8), du matériau d'échantillon humide (2) obtenu à partir du trou de forage, et
- le guidage, par le collecteur de matériau d'échantillon (8), d'au moins une partie du matériau d'échantillon humide reçu (2) dans l'au moins un sac de matériau d'échantillon (1).

12. Procédé selon la revendication 11, le procédé comprenant en outre :
- la lecture, par un lecteur RFID, d'au moins une étiquette RFID composée de l'au moins un sac de matériau d'échantillon (1).

13. Procédé selon la revendication 11 ou 12, le procédé comprenant en outre :
- l'analyse, par un analyseur de matériau d'échantillon (23), d'un matériau d'échantillon (2) au moins partiellement séché ou déshydraté présent dans l'au moins un sac de matériau d'échantillon (1).

14. Procédé selon la revendication 13, dans lequel l'analyse a lieu à travers le sac de matériau d'échantillon (1), après ouverture du sac de matériau d'échantillon (1) ou après retrait du matériau d'échantillon séché ou déshydraté du sac de matériau d'échantillon (1).

15. Utilisation d'un sac de matériau d'échantillon (1) selon l'une quelconque des revendications 1-6 pour la collecte de matériau d'échantillon humide (2) obtenu à partir d'un trou de forage.
